# EUROPEAN PATENT APPLICATION

(11) **EP 4 611 155 A1**
(43) Date of publication of application: **03.09.2025**
(21) Application number: 23927911.0
(22) Date of filing: 17.03.2023
(51) Int. Cl.: H01M 50/449

(54) **SEPARATOR, SECONDARY BATTERY, AND ELECTRICAL DEVICE**

(71) Applicant: Contemporary Amperex Technology (Hong Kong) Limited, Hong Kong (HK)
(72) Inventor: WANG, Zhaoguang, Ningde, Fujian 352100 (CN); YANG, Jianrui, Ningde, Fujian 352100 (CN); OUYANG, Chuying, Ningde, Fujian 352100 (CN); SUN, Chengdong, Ningde, Fujian 352100 (CN); HUANG, Siying, Ningde, Fujian 352100 (CN); MU, Xueying, Ningde, Fujian 352100 (CN); HAN, Chongwang, Ningde, Fujian 352100 (CN); WANG, Yaohui, Ningde, Fujian 352100 (CN)
(74) Representative: Ran, Handong
(86) International application number: PCT/CN2023/082335
(87) International publication number: WO 2024/192592

(57) **Abstract**

The present application provides a separator, including: a first porous base membrane and a second porous base membrane; a melting point of the first porous base membrane being higher than a melting point of the second porous base membrane; and in a cross-section in a thickness direction of the separator, an average pore area of the first porous base membrane being greater than an average pore area of the second porous base membrane. The separator can have both the air permeability and mechanical strength, thereby improving the reliability and cycle performance of the separator.

## Description

### TECHNICAL FIELD

The present application belongs to the field of secondary battery technologies, and specifically relates to a separator, a secondary battery, and an electrical apparatus.

### BACKGROUND

Secondary batteries are widely used in various consumer electronic products and electric vehicles due to their outstanding characteristics of light weight, no pollution, and no memory effect.

With the continuous development of the new energy industry, users have put forward higher demands on the use of secondary batteries.

Therefore, how to enable the secondary batteries to have better cycle performance is a technical problem to be urgently solved.

### SUMMARY OF THE INVENTION

In view of the technical problems existing in the background, the present application provides a separator, aiming to improve the cycle performance of secondary batteries.

In order to achieve the above objectives, the first aspect of the present application provides a separator, including: a first porous base membrane and a second porous base membrane; a melting point of the first porous base membrane being higher than a melting point of the second porous base membrane; and in a cross-section in a thickness direction of the separator, an average pore area of the first porous base membrane being greater than an average pore area of the second porous base membrane.

Compared with the prior art, the present application has at least the following beneficial effects:
The separator with a specific structure in the present application can not only improve the heat resistance, but also improve the air permeability. When the two base membranes adopt the specific average pore area design solution of the present application, pore blockage caused by physical lamination in a separator preparation process is effectively reduced, thereby improving the air permeability of the separator and maintaining the continuity and effectiveness of ion transmission. At the same time, the separator can also have good puncture performance, so that the two can achieve an optimal balance, thereby improving the cycle performance of a battery.

**In** any embodiment of the present application, a ratio of the average pore area of the first porous base membrane to the average pore area of the second porous base membrane is 1.05 to 10, optionally, 1.5 to 3.5.

When the ratio of the average pore area of the first porous base membrane to the average pore area of the second porous base membrane is 1.05 to 10, the separator can have better air permeability, which is conducive to penetration of lithium ions. The average pore area of the second porous base membrane is smaller than the average pore area of the first porous base membrane. A smaller average pore area results in more fiber filaments of the second porous base membrane occupying a spatial structure of the base membrane, a greater strength of the base membrane, and a higher resistance to lithium dendrites. Therefore, the separator can have both the air permeability and mechanical strength, thereby improving the reliability and cycle performance of the separator. When the ratio of the average pore area of the first porous base membrane to the average pore area of the second porous base membrane 1.5 to 3.5, the air permeability and mechanical strength of the separator can be further improved, thereby further improving the reliability and cycle performance of the separator.

**In** any embodiment of the present application, the average pore area of the first porous base membrane is 0.0001 µm² to 0.5 µm², optionally 0.01 µm² to 0.3 µm²; and/or the average pore area of the second porous base membrane is 0.0001 µm² to 0.4 µm², optionally 0.01 µm² to 0.25 µm².

When the average pore area of the first porous base membrane is 0.0001 µm² to 0.5 µm², and/or the average pore area of the second porous base membrane is 0.0001 µm² to 0.4 µm², because the first porous base membrane and the second porous base membrane have different average pore areas, the separator can have both the air permeability and mechanical strength, thereby improving the reliability and cycle performance of the separator. When the average pore area of the first porous base membrane is 0.01 µm² to 0.3 µm², and/or the average pore area of the second porous base membrane is 0.01 µm² to 0.25µm², the air permeability and mechanical strength of the separator can be further improved, thereby further improving the reliability and cycle performance of the separator.

In any embodiment of the present application, an average pore size of the first porous base membrane is greater than an average pore size of the second porous base membrane. Optionally, the average pore size of the first porous base membrane is 100 nm to 2000 nm, more optionally 100 nm to 350 nm. Optionally, the average pore size of the second porous base membrane is 100 nm to 2000 nm, more optionally 100 nm to 300 nm.

When the average pore size of the first porous base membrane is greater than the average pore size of the second porous base membrane, the average pore size of the first porous base membrane is 100 nm to 2000 nm, and/or the average pore size of the second porous base membrane is 100 nm to 2000 nm, because the average pore sizes of the two are different, a smaller average pore size results in a smaller space occupied by the average pore area, a larger space occupied by the fiber filaments of the base membrane, and a higher mechanical strength of the base membrane. On the contrary, for the separator, a smaller space occupied by the fiber filaments of the base membrane results in a larger average pore area of the separator and the better air permeability. Therefore, the separator can have both the air permeability and mechanical strength, thereby improving the reliability and cycle performance of the separator. When the average pore size of the first porous base membrane is 100 nm to 350 nm, and/or the average pore size of the second porous base membrane is 100 nm to 300 nm, the air permeability and mechanical strength of the separator can be further improved, thereby further improving the reliability and cycle performance of the separator.

In any embodiment of the present application, a porosity of the first porous base membrane is greater than a porosity of the second porous base membrane. Optionally, the porosity of the first porous base membrane is 30% to 80%, more optionally 35% to 60%; and/or, the porosity of the second porous base membrane is 30% to 70%, more optionally 35% to 50%.

When the porosity of the first porous base membrane is greater than the porosity of the second porous base membrane, the porosity of the first porous base membrane is 30% to 80%, and/or the porosity of the second porous base membrane is 30% to 70%, the porosities of the two base membranes are different, indicating that the proportions of pore structures per unit area are different, that is, the average pore areas is different. The porous base membrane with a large average pore area has good air permeability, and the base membrane with a small average pore area has good mechanical strength. The combination of the two can make the separator have both the air permeability and mechanical strength, thereby improving the reliability and cycle performance of the separator. When the porosity of the first porous base membrane is 35% to 60%, and/or the porosity of the second porous base membrane is 35% to 50%, the air permeability and mechanical strength of the separator can be further improved, thereby further improving the reliability and cycle performance of the separator.

In any embodiment of the present application, the separator further includes a porous coating layer, the porous coating layer is arranged between the first porous base membrane and the second porous base membrane, and the porous coating layer includes a binder. Optionally, the porous coating layer includes a binder and a filler. When the separator further includes a porous coating layer, and the porous coating layer includes a binder and a filler, the heat resistance of the separator can be improved, and the reliability of the secondary battery can be enhanced.

In any embodiment of the present application, the binder includes one or more of the following materials: polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethylated branched starch. When a porous coating layer is arranged between the first porous base membrane and the second porous base membrane, and the binder in the porous coating layer includes the above components, the reliability of the secondary battery can be improved.

In any embodiment of the present application, the filler includes at least one of inorganic particles, organic particles, and an organic-metal framework material. When a porous coating layer is arranged between the first porous base membrane and the second porous base membrane, and the filler in the porous coating layer includes at least one of the above inorganic particles, organic particles, and organic-metal framework material, the filler in the porous coating layer can further improve the heat resistance and mechanical strength of the separator, thereby improving the reliability of the secondary battery.

In any embodiment of the present application, the separator meets at least one of the following (1) and (2): (1) the porosity of the separator is 30% to 70%, optionally 35% to 55%; and (2) the air permeability of the separator is 250s/100 cc to 400s/100 cc, optionally 250s/100 cc to 320s/100 cc.

When at least one of the above characteristics of the separator meets the given range, the separator can have good heat resistance, air permeability, and mechanical strength, thereby improving the reliability and cycle performance of the secondary battery.

The second aspect of the present application provides a secondary battery, including the separator according to any one of the above solutions. When a secondary battery uses the given separator, the first porous base membrane with a large average pore area faces a positive electrode plate, and the second porous base membrane with a small average pore area faces a negative electrode plate. Because the second porous base membrane has a good mechanical strength and can exert its excellent physical properties, it is not easily punctured by lithium dendrites generated by the negative electrode, thereby improving the reliability of the secondary battery.

In any embodiment of the present application, the secondary battery includes a positive electrode plate, a negative electrode plate, and a separator according to any of the above solutions, where the separator is arranged between the positive electrode plate and the negative electrode plate, and the second porous base membrane of the separator faces the negative electrode plate. When a secondary battery uses the given separator, the second porous base membrane with a large average pore area faces the negative electrode plate, and because the second porous base membrane has a good mechanical strength and can exert its excellent physical properties, it is not easily punctured by lithium dendrites generated by the negative electrode, thereby improving the reliability of the secondary battery.

The third aspect of the present application provides an electrical apparatus including the secondary battery according to the second aspect of the present application. When the secondary battery of the electrical apparatus adopts the given separator, the reliability of the electrical apparatus can be improved.

The apparatus of the present application includes the secondary battery provided by the present application, and thus has at least the same advantages as the secondary battery.

### BRIEF DESCRIPTION OF THE DRAWINGS

In order to more clearly illustrate the technical solution of the present application, a brief introduction to the drawings used in the present application will be provided below. Apparently, the drawings described below are merely some embodiments of the present application. For those of ordinary skill in the art, other drawings may also be obtained based on these drawings without making creative efforts.
FIG. 1 is a schematic structural diagram of an embodiment of a separator according to the present application.
FIG. 2 is a schematic structural diagram of another embodiment of a separator according to the present application.
FIG. 3 is a schematic diagram of an embodiment of a secondary battery.
FIG. 4 is an exploded diagram of FIG. 3.
FIG. 5 is a schematic diagram of an embodiment of a battery module.
FIG. 6 is a schematic diagram of an embodiment of a battery pack.
FIG. 7 is an exploded diagram of FIG. 6.
FIG. 8 is a schematic diagram of an embodiment of an apparatus using a secondary battery as a power source.

### DETAILED DESCRIPTION

The present application is further described below in combination with specific embodiments. It should be understood that these embodiments are only used to illustrate the present application rather than limit the scope of the present application.

For the sake of brevity, merely some numerical ranges are disclosed herein. However, any lower limit can be combined with any upper limit to form a range not explicitly recited; and any lower limit can be combined with another lower limit to form a range not explicitly recited, and likewise, any upper limit can be combined with any another upper limit to form a range not explicitly recited. Further, each individually disclosed point or single value itself may serve as a lower limit or upper limit in combination with any other point or single value or with another lower limit or upper limit to form a range not explicitly recited.

In the description herein, unless otherwise stated, the term "or" is inclusive. For example, the phrase "A or B" means "A, B, or both A and B." More specifically, the condition "A or B" is met under any one of the following conditions: A is true (or present) and B is false (or absent); A is false (or absent) and B is true (or present); or both A and B are true (or present).

In the description herein, it should be noted that, "above" and "below" are inclusive of the numerical numeral itself, and the meaning of "more" in "one or more" is two and more, unless otherwise specified.

Unless otherwise stated, the terms used herein have the well-known meanings commonly understood by those skilled in the art. Unless otherwise specified, the numerical values of the parameters mentioned in the present application can be measured using various measurement methods commonly used in the art (for example, they can be tested according to the methods given in the examples of the present application).

### Secondary battery

A secondary battery refers to a battery that can be used continually by activating an active material in a charging manner, after the battery is discharged.

Generally, the secondary battery pack includes a positive electrode plate, a negative electrode plate, a separator, and an electrolyte. During charging and discharging of the battery, active ions are intercalated and deintercalated back and forth between the positive electrode plate and the negative electrode plate. The separator is arranged between the positive electrode plate and the negative electrode plate and functions to separate. The electrolyte serves to conduct ions between the positive electrode plate and the negative electrode plate.

### [Separator]

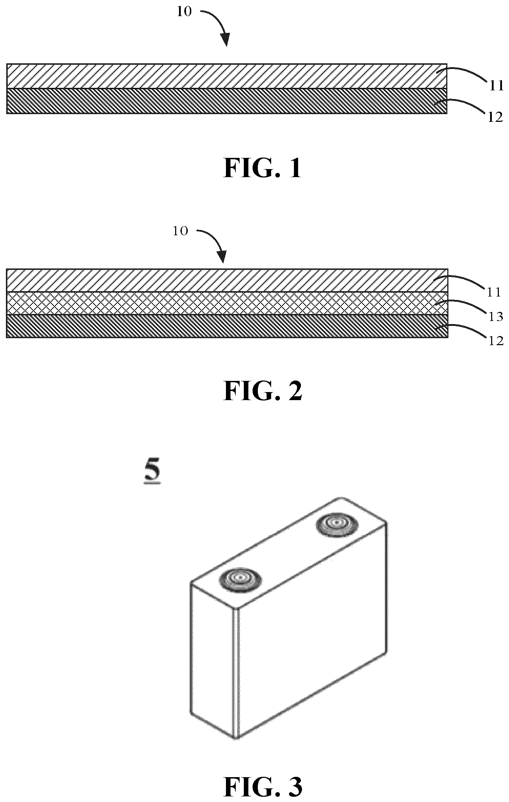

Referring to FIG. 1, an embodiment of the present application provides a separator 10, including: a first porous base membrane 11 and a second porous base membrane 12; a melting point of the first porous base membrane 11 being higher than a melting point of the second porous base membrane 12; and in a cross-section in a thickness direction of the separator, an average pore area of the first porous base membrane 11 being greater than an average pore area of the second porous base membrane 12.

In the present application, the average pore area of the porous base membrane refers to a ratio of the total pore area of the porous base membrane to the number of pores in the porous base membrane in the cross-section in the thickness direction of the separator.

Without wishing to be limited to any theory, the inventor has discovered through extensive research that the separator with a specific structure in the present application can not only improve the heat resistance, but also improve the air permeability. When the two base membranes adopt the specific average pore area design solution of the present application, pore blockage caused by physical lamination in a separator preparation process is effectively reduced, thereby improving the air permeability of the separator and maintaining the continuity and effectiveness of ion transmission. At the same time, the separator can also have good puncture performance, so that the two can achieve an optimal balance, thereby improving the cycle performance of a battery.

The inventor has discovered through in-depth research that, on the basis of meeting the above conditions, the separator of the present application can further improve the performance of the secondary battery if it also optionally meets one or more of the following conditions.

The materials of the first porous base membrane and the second porous base membrane are not particularly limited in the present disclosure and any well-known base membrane having good chemical stability and mechanical stability may be selected. The materials of the first porous base membrane and the second porous base membrane of the separator are the same or different. In some embodiments, the first porous base membrane and the second porous base membrane may be selected from one or more of polyolefin, polyether, polyetheretherketone, ethylene terephthalate, polyimide, polytetrafluoroethylene, polyvinylidene fluoride, polyvinyl alcohol, glass fiber, nonwoven fabric, polyethylene, polypropylene, and polyvinylidene fluoride.

The melting points of the first porous base membrane and the second porous base membrane can be tested using devices and methods known in the art. For example, it can be measured by differential scanning calorimetry. The test can be conducted with reference to the standard GB/T 19466.3-2004. As an example, the measurement can be carried out as follows: taking 4 mg to 6 mg of a sample to be tested, placing it in a sample chamber of a differential scanning calorimeter, raising the temperature from 25°C to 400°C, with a heating rate of 10°C/min, to obtain a melting endothermic curve of the sample, where a temperature corresponding to the peak of the curve is a melting point of the sample.

In any embodiment of the present application, the ratio of the average pore area of the first porous base membrane to the average pore area of the second porous base membrane is 1.05 to 10, for example, it may be 1.05, 1.2, 1.3, 1.4, 1.5, 2, 2.3, 2.55, 3, 3.1, 3.3, 3.5, 3.7, 4, 4.5, 5, 5.3, 6, 7, 8, 8.5, 9, 9.5, 10, or a range consisting of any two of the above values. For example, it may be 1.05 to 2.5, 1.05 to 3.5, 3 to 6, 4 to 7, 5 to 9, 1.05 to 10, 7 to 10, 8 to 10, 9 to 10, or the like. In some embodiments, the ratio of the average pore area of the first porous base membrane to the average pore area of the second porous base membrane is 1.05 to 10. Optionally, the ratio of the average pore area of the first porous base membrane to the average pore area of the second porous base membrane is 1.5 to 3.5, for example, it may be 1.5, 1.7, 1.9, 2, 2.1, 2.3, 2.5, 2.7, 3, 3.1, 3.3, 3.5, or a range consisting of any two of the above values. For example, it may be 1.5 to 2.5, 1.5 to 3.3, 2 to 3, 2.5 to 3.5, or the like.

When the ratio of the average pore area of the first porous base membrane to the average pore area of the second porous base membrane is 1.05 to 10, the separator can have better air permeability, which is conducive to penetration of lithium ions. The average pore area of the second porous base membrane is smaller than the average pore area of the first porous base membrane. A smaller average pore area results in more fiber filaments of the second porous base membrane occupying a spatial structure of the base membrane, a greater strength of the base membrane, and a higher resistance to lithium dendrites. Therefore, the separator can have both the air permeability and mechanical strength, thereby improving the reliability and cycle performance of the separator. When the ratio of the average pore area of the first porous base membrane to the average pore area of the second porous base membrane 1.5 to 3.5, the air permeability and mechanical strength of the separator can be further improved, thereby further improving the reliability and cycle performance of the separator.

**In** any embodiment of the present application, the average pore area of the first porous base membrane is 0.0001 µm² to 0.5 µm², for example, it may be 0.0001 µm², 0.0005 µm², 0.001 µm², 0.005 µm², 0.01µm², 0.05 µm², 0.1 µm², 0.2 µm², 0.3 µm², 0.4 µm², 0.5 µm², or a range consisting of any two of the above values. For example, it may be 0.0001 µm² to 0.01 µm², 0.01 µm² to 0.3 µm², 0.05 µm² to 0.4 µm², 0.1 µm² to 0.5 µm², or the like. **In** some embodiments, the average pore area of the first porous base membrane is 0.01 µm² to 0.3µm². The average pore area of the second porous base membrane is 0.0001 µm² to 0.4 µm², for example, it may be 0.0001 µm², 0.0005 µm², 0.001 µm², 0.005 µm², 0.01 µm², 0.05 µm², 0.1 µm², 0.2 µm², 0.25 µm², 0.3 µm², 0.4 µm², or a range consisting of any two of the above values. For example, it may be 0.0001 µm² to 0.01 µm², 0.01 µm² to 0.25 µm², 0.05 µm² to 0.4 µm², 0.1 µm² to 0.4 µm², or the like. **In** some embodiments, the average pore area of the second porous base membrane is 0.01 µm² to 0.25 µm².

When the average pore area of the first porous base membrane is 0.0001 µm² to 0.5µm², and/or the average pore area of the second porous base membrane is 0.0001 µm² to 0.4 µm², because the first porous base membrane and the second porous base membrane have different average pore areas, the separator can have both the heat resistance, the air permeability, and mechanical strength, thereby improving the reliability and cycle performance of the separator. When the average pore area of the first porous base membrane is 0.01 µm² to 0.3 µm², and/or the average pore area of the second porous base membrane is 0.01 µm² to 0.25µm², the heat resistance, the air permeability, and mechanical strength of the separator can be further improved, thereby further improving the reliability and cycle performance of the separator.

**In** the present application, a cross-sectional image of the separator is an image in the thickness direction of the separator. A separator sample under test of a certain size (for example, 15 mm×15 mm) may be cut out from any region of the separator, and a separator cross-section may be obtained by cutting with an ion beam polisher (for example, Hitachi Arblade 5000) under a freezing condition (for example, -80°C). Referring to JY/T010-1996, a scanning electron microscope (for example, Sigma 300 scanning electron microscope from ZEISS, Germany) is used for scanning to obtain a SEM image of the separator cross-section (the magnification may be 1000 to 30,000 times). An image processing detection system (for example, Yihong Separator Detection System 2022-0408) is used to obtain the average pore area of the porous base membrane by using a multistage binarization method.

When cutting with the ion beam polisher, the test sample may be wrapped with a copper foil or an aluminum foil before cutting. When obtaining the SEM image of the separator cross-section, the test sample may be subjected to metal spraying.

Using the image processing detection system, pore area data of the first porous base membrane and the second porous base membrane of the separator may be obtained respectively, and then the average pore areas of the first porous base membrane and the second porous base membrane of the separator may be obtained respectively through Mintab software. A ratio of the total pore area of the first porous base membrane of the separator to the number of pores in the first porous base membrane is the average pore area of the first porous base membrane, and a ratio of the total pore area of the second porous base membrane of the separator to the number of pores in the second porous base membrane is the average pore area of the second porous base membrane.

In any embodiment of the present application, the average pore size of the first porous base membrane is greater than the average pore size of the second porous base membrane. The average pore size of the first porous base membrane is 100 nm to 2000 nm. For example, it may be 100 nm, 200 nm, 250 nm, 300 nm, 350 nm, 500 nm, 700 nm, 900 nm, 1000 nm, 1250 nm, 1500 nm, 1700 nm, 1800 nm, 1900 nm, 2000 nm, or a range consisting of any two of the above values. For example, it may be 100 nm to 350 nm, 200 nm to 900 nm, 300 nm to 1000 nm, 500 nm to 1500 nm, 1000 nm to 1800 nm, 1250 nm to 2000 nm, or the like. In some embodiments, the first porous base membrane has an average pore size of 100 nm to 350 nm. The average pore size of the second porous base membrane is 100 nm to 2000 nm. For example, it may be 100 nm, 200 nm, 220 nm, 250 nm, 300 nm, 350 nm, 500 nm, 550 nm, 700 nm, 900 nm, 1000 nm, 1250 nm, 1500 nm, 1700 nm, 1800 nm, 1900 nm, 2000 nm, or a range consisting of any two of the above values. For example, it may be 100 nm to 350 nm, 250 nm to 700 nm, 300 nm to 1000 nm, 500 nm to 1000 nm, 1000 nm to 1800 nm, 1250 nm to 2000 nm, or the like. In some embodiments, the first porous base membrane has an average pore size of 100 nm to 300 nm.

When the average pore size of the first porous base membrane is greater than the average pore size of the second porous base membrane, the average pore size of the first porous base membrane is 100 nm to 2000 nm, and/or the average pore size of the second porous base membrane is 100 nm to 2000 nm, because the average pore sizes of the two are different, a smaller average pore size results in a smaller space occupied by the average pore area, a larger space occupied by the fiber filaments of the base membrane, and a higher mechanical strength of the base membrane. On the contrary, a smaller space occupied by the fiber filaments of the base membrane results in a larger average pore area of the separator and the better air permeability. Therefore, the separator can have both the air permeability and mechanical strength, thereby improving the reliability and cycle performance of the separator. When the average pore size of the first porous base membrane is 100 nm to 350 nm, and/or the average pore size of the second porous base membrane is 100 nm to 300 nm, the air permeability and mechanical strength of the separator can be further improved, thereby further improving the reliability and cycle performance of the separator.

According to some embodiments, the average pore size has a meaning well known in the art, and may be tested using methods known in the art. For example, a mercury porosimeter may be used for testing with reference to GB/T 21650.1-2008.

In any embodiment of the present application, the porosity of the first porous base membrane is greater than the porosity of the second porous base membrane. Optionally, the porosity of the first porous base membrane is 30% to 80%. For example, it may be 30%, 35%, 38%, 40%, 50%, 55%, 60%, 70%, 75%, 80%, or a range consisting of any two of the above values. For example, it may be 30% to 40%, 35% to 60%, 50% to 70%, 75% to 80%, or the like. In some embodiments, the first porous base membrane has a porosity of 35% to 60%. The porosity of the second porous base membrane is 30% to 70%. For example, it may be 30%, 35%, 40%, 45%, 50%, 60%, 65%, 70%, or a range consisting of any two of the above values. For example, it may be 30% to 40%, 35% to 50%, 50% to 60%, 65% to 70%, or the like. In some embodiments, the second porous base membrane has a porosity of 35% to 50%.

When the porosity of the first porous base membrane is 30% to 80%, and/or the porosity of the second porous base membrane is 30% to 70%, the porosities of the two base membranes are different, indicating that the proportions of pore structures per unit area are different, that is, the average pore areas is different. The porous base membrane with a large average pore area has good air permeability, and the base membrane with a small average pore area has good mechanical strength. The combination of the two can make the separator have both the air permeability and mechanical strength, thereby improving the reliability and cycle performance of the separator. When the porosity of the first porous base membrane is 35% to 60%, and/or the porosity of the second porous base membrane is 35% to 50%, the air permeability and mechanical strength of the separator can be further improved, thereby further improving the reliability and cycle performance of the separator.

According to some embodiments, the porosity has a meaning well known in the art, and may be tested using methods known in the art. For example, a mercury porosimeter may be used for testing with reference to GB/T 21650.1-2008.

Referring to FIG. 2, in any embodiment of the present application, a porous coating layer 13 may be further arranged between the first porous base membrane 11 and the second porous base membrane 12, and the porous coating layer 13 is arranged between the first porous base membrane 11 and the second porous base membrane 12. The porous coating layer 13 includes a binder. Optionally, the porous coating layer 13 may include a binder and a filler. When the porous coating layer 13 is arranged between the first porous base membrane and the second porous base membrane, and the porous coating layer 13 includes the binder and the filler, it can not only weaken the process defects in an overheating and pressing composite process, but also further improve the heat resistance and mechanical strength of the separator, thereby improving the reliability of the secondary battery.

The first porous base membrane and the second porous base membrane may be directly composited by hot-pressing. During the hot-pressing composite process, if the temperature is too high, it will lead to a small porosity and poor air permeability, and if the temperature is too low, the first porous base membrane and the second porous base membrane will not be firmly bonded. Therefore, it is necessary to adjust the appropriate hot-pressing temperature. Optionally, the hot-pressing temperature is between 20°C and 50°C.

In any embodiment of the present application, the binder includes one or more of the following materials: polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethylated branched starch. When the porous coating layer 13 is arranged between the first porous base membrane 11 and the second porous base membrane 12, and the binder in the porous coating layer 13 includes the above components, the heat resistance and mechanical strength of the separator can be further improved, thereby improving the reliability of the secondary battery. In some embodiments, carboxymethyl cellulose may be used as a thickener to adjust the viscosity of a slurry.

In any embodiment of the present application, the filler includes at least one of inorganic particles, organic particles, and an organic-metal framework material.

Optionally, the inorganic particles include one or more of inorganic particles having a dielectric constant of 5 or more, inorganic particles having ion conductivity but not storing ions, and inorganic particles capable of undergoing electrochemical reactions.

Optionally, the inorganic particles having a dielectric constant of 5 or more may include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (PZT) Pb₁₋ₘLaₘZr₁₋ₙTiₙO₃ (PLZT, 0<m<1, and 0<n<1), Pb(Mg₃Nb_{2/3})O₃-PbTiO₃ (PMN-PT), and their respective modified inorganic particles. Optionally, the various inorganic particles may be modified by chemical modification and/or physical modification. The chemical modification methods include coupling agent modification (for example, using a silane coupling agent, a titanate coupling agent, and the like), surfactant modification, polymer grafting modification, and the like. The physical modification method may be mechanical dispersion, ultrasonic dispersion, high energy treatment, or the like. The modification treatment can reduce the agglomeration of inorganic particles, thereby enabling an adhesive layer to have a more stable and more uniform structure. In addition, by selecting a coupling agent, surfactant, or polymer with specific functional groups to modify the inorganic particles, it is also helpful to improve the wetting and retention properties of the adhesive layer for the electrolyte solution and improve the adhesion of the adhesive layer to the first porous base membrane and the second porous base membrane.

Optionally, the inorganic particles having ion conductivity but not storing ions may include at leas one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, and 0<z4<7. Therefore, this can further improve the ion conductivity of the separator.

Optionally, the inorganic particles capable of undergoing electrochemical reactions may include at least one of lithium-containing transition metal oxides, lithium-containing phosphates, carbon-based materials, silicon-based materials, tin-based materials, and lithium titanium compounds.

Optionally, the organic particles may include one or more of polycarbonate, polythiophene, polypyridine, polystyrene, polyacrylate, polyethylene, polypropylene, cellulose, cellulose modifier (for example, carboxymethyl cellulose), melamine resin, phenolic resin, polyester (for example, polyethylene terephthalate, polyethylene naphthalate, and polybutylene terephthalate), silicone resin, polyimide, polyamideimide, polyaramid, polyphenylene sulfide, polysulfone, polyethersulfone, polyetheretherketone, polyaryletherketone, copolymer of butyl acrylate and ethyl methacrylate (for example, cross-linked polymer of butyl acrylate and ethyl methacrylate).

Optionally, the organic-metal framework material may include one or more of a nitrogen-containing heterocyclic ligand building structure, an organic carboxylic acid ligand building structure, and a nitrogen-oxygen mixed ligand building structure.

In some embodiments, the content of the binder may be greater than or equal to 10%, optionally 10% to 30%, based on the total weight of the adhesive layer.

In some embodiments, the content of the filler may be less than or equal to 90%, optionally 40% to 90% or 60% to 80%, based on the total weight of the adhesive layer.

In some embodiments, the coating may further include a dispersant, such as carboxymethyl cellulose, which can adjust the viscosity of the coating slurry and improve the quality and uniformity of the coating.

In some embodiments, the content of the dispersant may be less than or equal to 25%, optionally less than or equal to 20%, based on the total weight of the adhesive layer.

When a porous coating layer is arranged between the first porous base membrane and the second porous base membrane, and the filler in the porous coating layer includes at least one of the above inorganic particles, organic particles, and organic-metal framework material, the filler in the porous coating layer can further improve the heat resistance and mechanical strength of the separator, thereby improving the reliability of the secondary battery.

**In** any embodiment of the present application, the separator meets at least one of the following (1) and (2): (1) the porosity of the separator is 30% to 70%, optionally 35% to 55%; and (2) the air permeability of the separator is 250s/100 cc to 400s/100 cc, optionally 250s/100 cc to 320s/100 cc.

When at least one of the above characteristics of the separator meets the given range, the separator can have good heat resistance, air permeability, and mechanical strength, thereby improving the reliability and cycle performance of the secondary battery.

The second aspect of the present application provides a secondary battery, including the separator according to any one of the above solutions. When a secondary battery uses the given separator, the first porous base membrane with a large average pore area faces a positive electrode plate, and the second porous base membrane with a small average pore area faces a negative electrode plate. Because the second porous base membrane has a good mechanical strength and can exert its excellent physical properties, it is not easily punctured by lithium dendrites generated by the negative electrode, thereby improving the reliability of the secondary battery.

In any embodiment of the present application, the secondary battery includes a positive electrode plate, a negative electrode plate, and a separator according to any of the above solutions, where the separator is arranged between the positive electrode plate and the negative electrode plate, and the second porous base membrane of the separator faces the negative electrode plate. When a secondary battery uses the given separator, the second porous base membrane with a large average pore area faces the negative electrode plate, and because the second porous base membrane has a good mechanical strength and can exert its excellent physical properties, it is not easily punctured by lithium dendrites generated by the negative electrode, thereby improving the reliability of the secondary battery.

Unless otherwise specified, all raw materials used in the separator (such as the first porous base membrane, the second porous base membrane, the binder, and the filler) may be obtained from the market.

### [Positive electrode plate]

In the secondary battery, the positive electrode plate includes a positive electrode current collector and a positive electrode film layer arranged on the positive electrode current collector, and the positive electrode film layer includes a positive electrode active material.

The positive electrode current collector may be a conventional metal foil or a composite current collector (a metal material may be arranged on a polymer substrate to form a composite current collector). As an example, an aluminum foil may be used as the positive electrode current collector.

There is no particular limitation on the specific type of the positive electrode active material, and a material that can be used as the material of a positive electrode of the secondary battery as known in the art can be used, those skilled in the art can make options according to actual requirements.

As an example, the positive electrode active material may include, but is not limited to, one or more of a lithium transition metal oxide, an olivine-structured lithium-containing phosphate, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but are not limited to, one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, and modified compounds thereof. These materials are all commercially available.

The modified compounds of the above materials may be obtained by performing doping modification and/or surface coating modification on the materials.

Generally, the positive electrode film layer more optionally includes a binder, a conductive agent, and other optional aids.

As an example, the conductive agent may be one or more of superconducting carbon, acetylene black, carbon black, Ketjen black, carbon dot, carbon nanotube, conductive carbon black (Super P, SP), graphene, and carbon nanofiber.

As an example, the binder may be one or more of Polymerized Styrene Butadiene Rubber (SBR), water-based acrylic resin, Polyvinylidene Fluoride (PVDF), Polytetrafluoroethylene (PTFE), Ethylene-vinyl Acetate Copolymer (EVA), Polyacrylic Acid (PAA), Carboxymethyl Cellulose (CMC), Polyvinyl Alcohol (PVA, Vinylalcohol Polymer), and Polyvinyl Butyral (PVB).

### [Negative electrode plate]

In the secondary battery, the negative electrode plate includes a negative electrode current collector and a negative electrode film layer arranged on the negative electrode current collector, and the negative electrode film layer includes a negative electrode active material.

The negative electrode current collector may be a conventional metal foil or a composite current collector (for example, a metal material may be arranged on a polymer substrate to form a composite current collector). As an example, a copper foil may be used as the negative electrode current collector.

There is no particular limitation on the specific type of the negative electrode active material, and a material that can be used as the material of a negative electrode of the secondary battery as known in the art can be used, those skilled in the art can make options according to actual requirements. As an example, the negative electrode active material may include, but is not limited to, one or more of artificial graphite, natural graphite, hard carbon, soft carbon, a silicon-based material, and a tin-based material. The silicon-based material may be selected from one or more of elemental silicon, a silicon oxide compound (for example, silicon (II) oxide), a silicon-carbon composite, a silicon-nitrogen composite, and a silicon alloy. The tin-based material may be selected from one or more of elemental tin, a tin oxygen compound and a tin alloy. These materials are all commercially available.

In some embodiments, in order to further improve the energy density of the battery, the negative electrode active material may include a silicon-based material.

Generally, the negative electrode film layer more optionally includes a binder, a conductive agent, and other optional adjuvants.

As an example, the conductive agent may be one or more of superconducting carbon, acetylene black, carbon black, Ketjen black, carbon dot, carbon nanotube, graphene, and carbon nanofiber.

As an example, the binder may be one or more of Polymerized Styrene Butadiene Rubber (SBR), water-based acrylic resin, Polyvinylidene Fluoride (PVDF), Polytetrafluoroethylene (PTFE), Ethylene-vinyl Acetate Copolymer (EVA), Polyvinyl Alcohol (PVA), and Polyvinyl Butyral (PVB).

As an example, other optional aids may include a thickener (such as Carboxymethylcellulose Sodium (CMC-Na)), PTC thermistor material, and the like.

### [Electrolyte solution]

The secondary battery may include an electrolyte solution, and the electrolyte solution serves to conduct ions between the positive electrode and the negative electrode. The electrolyte solution may include an electrolyte salt and a solvent.

As an example, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

As an example, the solvent may be selected from one or more of Ethylene Carbonate (EC), Propylene Carbonate (PC), Methyl Ethyl Carbonate (EMC), Diethyl Carbonate (DEC), Dimethyl Darbonate (DMC), Dipropyl Carbonate (DPC), Methyl Propyl Carbonate (MPC), Diisopropyl Carbonate (EPC), Butylene Carbonate (BC), Fluoroethylene Carbonate (FEC), Methyl Formate (MF), Methyl Acetate (MA), Ethyl Acetate (EA), n-Propyl Acetate (PA), Methyl Propionate (MP), Ethyl Propanoate (EP), n-Propyl Propionate (PP), Methyl Butyrate (MB), Ethyl Butyrate (EB), 1,4-Butyrolactone (GBL), Tetramethylene Sulfone (SF), Methyl Sulfone (MSM), Methyl Ethyl Sulfone (EMS), and Diethyl Sulfone (ESE).

In some embodiments, the electrolyte solution may further include an additive. For example, the additive may include a negative electrode film-forming additive, or may include a positive electrode film-forming additive, and may further include an additive capable of improving certain performances of the battery, such as an additive for improving the overcharging performance of the battery, an additive for improving the high temperature performance of the battery, and an additive for improving the low temperature performance of the battery.

When a secondary battery uses the given separator, the first porous base membrane with a large average pore area faces a positive electrode plate, and the second porous base membrane with a small average pore area faces a negative electrode plate. Because the second porous base membrane has a good mechanical strength and can exert its excellent physical properties, it is not easily punctured by lithium dendrites generated by the negative electrode, thereby improving the reliability of the secondary battery.

The examples of the present application has no particular limitation on the shape of the secondary battery, which may be cylindrical, square, or in any other shape. For example, FIG. 3 shows a secondary battery 5 with a square structure as an example.

In some embodiments, the secondary battery may include an outer package. The outer package may be used to encapsulate the positive electrode plate, the negative electrode plate, and the electrolyte. The first porous base membrane of the separator faces the positive electrode plate.

In some embodiments, the outer package of the secondary battery may be a hard case, such as a hard plastic case, an aluminum case, and a steel case. The outer package of the secondary battery may also be a soft pack, such as a bag-type soft pack. The material of the soft pack may be plastic, for example, including one or more of Polypropylene (PP), Polybutylene Terephthalate (PBT), and Polybutylene Succinate (PBS).

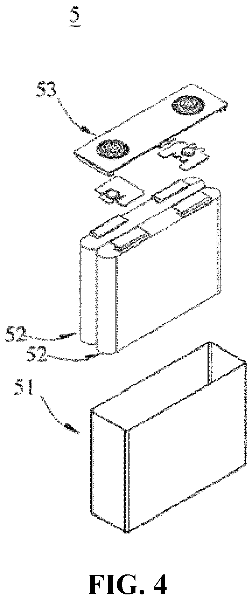

In some embodiments, referring to FIG. 4, the outer package may include a case 51 and a cover plate 53. The case 51 may include a bottom plate and a side plate connected to the bottom plate. The bottom plate and the side plate enclose to form an accommodating cavity. The case 51 has an opening in communication with the accommodating cavity, and the cover plate 53 can cover the opening to close the accommodating cavity.

The preparation method of the secondary battery according to the present application is well known. In some embodiments, the secondary battery may be formed by assembling the positive electrode plate, the separator, the negative electrode plate, and the electrolyte solution. As an example, the positive electrode plate, the separator, and the negative electrode plate may form an electrode assembly by a winding process and/or a lamination process. The electrode assembly is placed in the outer package, dried, and injected with the electrolyte solution. After vacuum packaging, standing, chemical transformation, shaping, and other processes, a battery cell can be obtained. A plurality of battery cells may be further connected in series, in parallel, or in parallel-series to form a battery module. A plurality of battery modules may be further connected in series, in parallel, or in parallel-series to form a battery pack. In some embodiments, a plurality of battery cells may also directly form a battery pack.

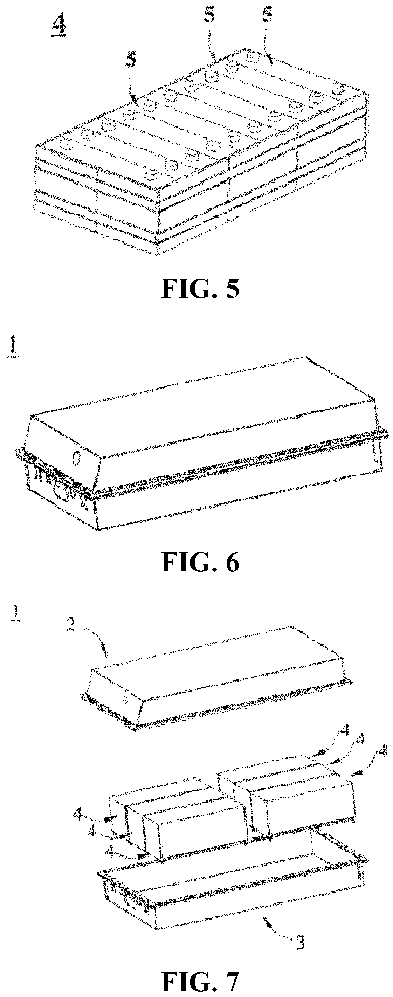

FIG. 5 shows a battery module 4 as an example. Referring to FIG. 5, in the battery module 4, a plurality of secondary batteries 5 may be sequentially arranged in a length direction of the battery module 4. Of course, arrangement in any other manner is also available. The plurality of secondary batteries 5 may further be fixed by fasteners.

The battery module 4 may further include a shell having an accommodating space, and the plurality of secondary batteries 5 are accommodated in the accommodating space.

In some embodiments, the above battery modules may further be assembled into a battery pack, and the number of battery modules contained in the battery pack may be adjusted according to the application and capacity of the battery pack.

FIG. 6 and FIG. 7 show a battery pack 1 as an example. Referring to FIG. 6 and FIG. 7, the battery pack 1 may include a battery box and a plurality of battery modules 4 arranged in the battery box. The battery box includes an upper box 2 and a lower box 3, where the upper box 2 can cover the lower box 3 and forms an enclosed space for accommodating the battery modules 4. The plurality of battery modules 4 may be arranged in the battery box in any manner.

### [Apparatus]

The present application further provides an electrical apparatus, and the electrical apparatus including the secondary battery according to the present application. The battery cell, the battery module, or the battery pack may be used as a power source of the apparatus or an energy storage unit of the apparatus. The apparatus may be, but is not limited to, a mobile device (for example, a mobile phone and a laptop), an electric vehicle (for example, an all-electric vehicle, a hybrid electric vehicle, a plug-in hybrid electric vehicle, an electric bicycle, an electric scooter, an electric golf cart, and an electric truck), an electric train, a ship and a satellite, and an energy storage system.

For the apparatus, the battery cell, battery module, or battery pack may be selected according to the use requirements thereof.

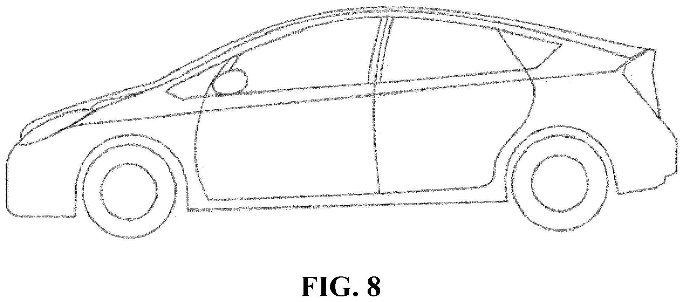

FIG. 8 shows an electrical apparatus as an example. The electrical apparatus may be an all-electric vehicle, a hybrid electric vehicle, or a plug-in hybrid electric vehicle. In order to meet the requirements of the electrical apparatus for high power and high energy density of a secondary battery, a battery pack or a battery module may be used.

As another example, the electrical apparatus may be a mobile phone, a tablet, a laptop, or the like. The electrical apparatus is generally required to be thin and light, and may use a battery cell as a power source.

The apparatus of the present application includes the secondary battery provided by the present application, and thus has at least the same advantages as the secondary battery.

The beneficial effects of the present application are further illustrated below in conjunction with the embodiments.

In order to make the technical problems sloved, technical solutions, and beneficial effects of the embodiments of the present application clearer, further description will be made in detail below with reference to the embodiments. Apparently, the described embodiments are merely a part of embodiments of the present application, instead of all embodiments. The following description of at least one example embodiment is merely illustrative in nature and is in no way intended to limit the present application, and application thereof. Based on the embodiments of the present application, all other embodiments derived by those of ordinary skill in the art without any creative effort shall all fall within the protection scope of the present application.

### I. Preparation of Separator

### Separator 1:

### (1) Provide a first porous base membrane and a second porous base membrane.

The first porous base membrane meets the following requirements: the material is Polypropylene (PP), the thickness is 6 µm, and the average pore area S1 is 0.0025 µm².

The second porous base membrane meets the following requirements: the material is Polyethylene (PE), the thickness is 4 µm, and the average pore area S2 is 0.0023 µm².

A ratio of an average pore area S1 of the first porous base membrane to an average pore area S2 of the second porous base membrane is 1.09.
(2) Prepare a coating slurry: Prepare a coating slurry: Mix a binder polyacrylate and fillers alumina particles and Carboxymethyl Cellulose in a ratio of 1:4:1 in an appropriate amount of solvent deionized water to prepare a coating slurry.
(3) Apply the coating slurry of the step (2) on one side of the second porous base membrane of the step (1) to form a coating layer.
(4) Composite the first porous base membrane and the second porous base membrane coated in the step (3) by hot-pressing to obtain a separator, where the coating layer is located between the first porous base membrane and the second porous base membrane.

The preparation method of a separator 2-11 is similar to that of the separator 1, except that the average pore area of the first porous base membrane or the second porous base membrane is adjusted. See Table 1 for details. The other preparation methods are consistent with the preparation method of the separator in Embodiment 1.

The separator 1 prepared by the above method is subjected to relevant performance tests, and details of specific results are shown in Table 1.

### II. Preparation of Battery

### Embodiment 1

### 1. Preparation of positive electrode plate

The positive electrode active material LiNi_{0.8}Co_{0.1}Mn_{0.1}O₂ (NCM811), the conductive agent carbon black (SuperP), and the binder Polyvinylidene Difluoride (PVDF) are evenly fixed in an appropriate amount of solvent N-Methylpyrrolidone (NMP) at a mass ratio of 96.2:2.7:1.1 to obtain a positive electrode slurry. The positive electrode slurry is applied on an aluminum foil as the positive current collector, and then subjected to oven drying, cold pressing, slitting, and cutting processes to obtain a positive electrode plate.

### 2. Preparation of negative electrode plate

The negative electrode active material artificial graphite, the conductive agent carbon black (SuperP), and the binder Polymerized Styrene Butadiene Rubber (SBR), and Carboxymethylcellulose Sodium (CMC-Na) are evenly fixed in an appropriate amount of solvent deionized water at a mass ratio of 96.4:0.7:1.8:1.1t o obtain a negative electrode slurry. The negative electrode slurry is applied on a copper foil as the negative current collector, and then subjected to oven drying, cold pressing, slitting, and cutting processes to obtain a negative electrode plate.

### 3. Separator

The separator 1 prepared above is employed as the separator.

### 4. Preparation of electrolyte solution

Ethylene Carbonate (EC) and Methyl Ethyl Carbonate (EMC) are mixed at a mass ratio of 30:70 to obtain an organic solvent, and fully dried electrolyte salt LiPF₆ is dissolved in the mixed solvent, the concentration of the electrolyte salt is 1.0 mol/L, and the mixture is evenly mixed to obtain an electrolyte solution.

### 5. Preparation of secondary battery

The positive electrode plate, the separator, and the negative electrode plate are stacked in sequence, so that the separator is located between the positive electrode plate and the negative electrode plate to play an isolation role, and then wound to obtain an electrode assembly. The electrode assembly is placed in an outer package, the electrolyte solution prepared above is poured in the dried secondary battery, and a secondary battery is obtained after being subjected to vacuum packaging, standing, chemical formation, and shaping processes.

The preparation methods of the secondary batteries of Embodiments 2 to 10 and Comparative Example 1 are similar to that of the secondary battery of Embodiment 1, except that different separators are used (among which, Embodiments 1 to 10 use separators 1 to 10, and Comparative Example 1 uses a separator 11). See Table 1 for details.

### III. Performance test of Battery

### 1. Air permeability test

The air permeability of the separator has a well-known general meaning in the art, and may be measured in accordance with a well-known method in the art. For example, the test may be carried out with reference to the standard GB/T 36363-2018.

### 2. Battery cycle performance (round)

At 25°C, each of the secondary batteries prepared in the embodiments and the comparative example are charged to a cut-off voltage of V1 at a constant current rate of 1 C, then charged to a current ≤ 0.05 C at a constant voltage, left to stand for 5 min, then discharged to a discharge cut-off voltage of V2 at a constant current rate of 0.33 C, and left to stand for 5 min. This is one charging and discharging cycle. The cyclic charging and discharging test is performed on the battery according to this method until the battery capacity is attenuated to 80%. The number of cycle rounds at this moment is denoted as the cycle life of the battery at 25°C.

**Table 1 Test Results of Battery Performance of Various Embodiments And a Comparative Example**

| Serial number | | | Embodiment 1 | Embodiment 2 | Embodiment 3 | Embodiment 4 | Embodiment 5 | Embodiment 6 | Embodiment 7 | Embodiment 8 | Embodiment 9 | Embodiment 10 | Comparative Example 1 |
|---|---|---|---|---|---|---|---|---|---|---|---|---|---|
| Separator structure | First porous base membrane | Substance | PP | PP | PP | PP | PP | PP | PTFE | PVF | PET | PTFE | PP |
| | | Average pore area S1 (µm²) | 0.0025 | 0.0017 | 0.0034 | 0.0017 | 0.0034 | 0.0021 | 0.0039 | 0.0034 | 0.0034 | 0.0043 | 0.0002 |
| | Second porous base membrane | Substance | PE | PE | PE | PE | PE | PP | PE | PE | PE | PE | PE |
| | | Average pore area S2 (µm²) | 0.0023 | 0.0014 | 0.0023 | 0.0009 | 0.0016 | 0.0008 | 0.0012 | 0.0012 | 0.0012 | 0.0012 | 0.0012 |
| | S1/S2 | | 1.09 | 1.21 | 1.48 | 1.89 | 2.13 | 2.63 | 3.25 | 2.83 | 2.83 | 3.58 | 0.17 |
| Separator performance test | Air permeability (s/100 cc) | | 400 | 380 | 360 | 330 | 300 | 270 | 240 | 210 | 220 | 200 | 560 |
| Cycle performance test | Battery cycle performance (round) | | 3147 | 3250 | 3387 | 3469 | 3595 | 3480 | 3654 | 3351 | 3265 | 3353 | 3029 |

As can be seen from Table 1, in Embodiments 1 to 10, the separators used meet that the melting point of the first porous base membrane is higher than the melting point of the second porous base membrane, and the average pore area of the first porous base membrane is larger than the average pore area of the second porous base membrane, so that the prepared batteries have better cycle performance and higher reliability. However, the separator used in Comparative example 1 does not meet the design of the present application, resulting in poor cycle performance of the prepared battery.

While the above description merely provides specific embodiments of the present application, the scope of protection of the present application is not limited to the specific embodiments. Any person skilled in the art can easily conceive of various equivalent modifications or replacements without departing from the technical scope disclosed in the present application. All these modifications or replacements should be encompassed within the scope of protection of the present application. Therefore, the scope of the present application shall be determined with reference to the scope of the claims.

## Claims

1. A separator, comprising: a first porous base membrane and a second porous base membrane; a melting point of the first porous base membrane being higher than a melting point of the second porous base membrane; and in a cross-section in a thickness direction of the separator, an average pore area of the first porous base membrane being greater than an average pore area of the second porous base membrane.

2. The separator according to claim 1, wherein a ratio of the average pore area of the first porous base membrane to the average pore area of the second porous base membrane is 1.05 to 10, optionally 1.5 to 3.5.

3. The separator according to claim 1 or 2, wherein
the average pore area of the first porous base membrane is 0.0001 µm2 to 0.5 µm2, optionally 0.01 µm2 to 0.3 µm2; and/or
the average pore area of the second porous base membrane is 0.0001 µm2 to 0.4 µm2, optionally 0.01 µm2 to 0.25 µm2.

4. The separator according to any one of claims 1 to 3, wherein
an average pore size of the first porous base membrane is greater than an average pore size of the second porous base membrane;
optionally, the average pore size of the first porous base membrane is 100 nm to 2000 nm, more optionally 100 nm to 350 nm; and
optionally, the average pore size of the second porous base membrane is 100 nm to 2000 nm, more optionally 100 nm to 300 nm.

5. The separator according to any one of claims 1 to 4, wherein
a porosity of the first porous base membrane is greater than a porosity of the second porous base membrane;
optionally, the porosity of the first porous base membrane is 30% to 80%, more optionally 35% to 60%; and
optionally, the porosity of the second porous base membrane is 30% to 70%, more optionally 35% to 50%.

6. The separator according to any one of claims 1 to 5, wherein the separator further comprises a porous coating layer, the porous coating layer is arranged between the first porous base membrane and the second porous base membrane, and the porous coating layer comprises a binder; optionally, the porous coating layer comprises a binder and a filler.

7. The separator according to claim 6, wherein the binder comprises one or more of the following materials: polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethylated branched starch.

8. The separator according to any one of claim 6 or 7, wherein the filler comprises at least one of inorganic particles, organic particles, and an organic-metal framework material.

9. The separator according to any one of claims 1 to 8, wherein the separator meets at least one of the following (1) and (2):
the porosity of the separator is 30% to 70%, optionally 35% to 55%;
the air permeability of the separator is 250s/100 cc to 400s/100 cc, optionally 250s/100 cc to 320s/100 cc.

10. A secondary battery, comprising the separator according to any one of claims 1 to 9.

11. The secondary battery according to claim 10, comprising a positive electrode plate and a negative electrode plate, wherein the separator is arranged between the positive electrode plate and the negative electrode plate, and the second porous base membrane of the separator faces the negative electrode plate.

12. An electrical apparatus, comprising a secondary battery according to claim 10 or 11.
